# EUROPÄISCHE PATENTSCHRIFT

(11) **EP 1 412 695 B1**
(45) Veröffentlichungstag und Bekanntmachung des Hinweises auf die Patenterteilung: **06.04.2005**
(21) Anmeldenummer: 02764791.6
(22) Anmeldetag: 26.07.2002
(51) Int. Cl.: G01B 9/02, G01C 19/72, G01R 15/24

(54) **ERHÖHUNG DER LANGZEIT BETRIEBSZUVERLÄSSIGKEIT EINES FASEROPTISCHEN INTERFEROMETERS DURCH SCHONUNG DER LICHTQUELLE**
INCREASE OF THE LONG-TERM OPERATIONAL RELIABILITY OF A FIBRE OPTIC INTERFEROMETER BY PROTECTING THE LIGHT SOURCE
ACCROISSEMENT DE LA SECURITE DE FONCTIONNEMENT LONGUE DUREE D'UN INTERFEROMETRE A FIBRE OPTIQUE PAR MENAGEMENT DE LA SOURCE LUMINEUSE

(30) Priorität: 03.08.2001 DE 10138154
(43) Veröffentlichungstag der Anmeldung: 28.04.2004
(73) Patentinhaber: LITEF GmbH, 79115 Freiburg (DE)
(72) Erfinder: KELLER, Manfred, 79359 Riegel (DE)
(74) Vertreter: Müller, Frithjof E., Dipl.-Ing.
(86) Internationale Anmeldenummer: PCT/EP2002/008345
(87) Internationale Veröffentlichungsnummer: WO 2003/014656

(56) Entgegenhaltungen:
- EP-A- 0 802 397
- US-A- 5 412 472
- US-A- 5 563 705
- US-A- 5 926 275

## Beschreibung

Die Erfindung betrifft ein Verfahren und eine Einrichtung zur Erhöhung der Langzeit-Betriebszuverlässigkeit eines faseroptischen Interferometers.

Bei bekannten faseroptischen Systemen zur optischen interferometrischen Messung einer physikalischen Größe wie beispielsweise einer Drehrate, einer elektrischen Spannung oder eines elektrischen Stroms wird die relative Phase zweier aus einer gemeinsamen Lichtquelle stammenden Teilstrahlen, die das Interferometer durchsetzen, durch die zu messende physikalische Größe geändert. Danach werden die beiden Teilstrahlen zur Interferenz gebracht, womit die Intensität des dabei entstehenden Interferenzstrahls proportional zu der Phasenverschiebung der beiden Teilstrahlen gegeneinander ist. Der Interferenzstrahl wird einem Photo-Detektor zugeführt und bildet darauf ein Interferenzmuster ab, und der Detektor erzeugt ein zur Intensität des Interferenzmusters proportionales Detektorausgangssigna1 auf dessen Basis die physikalische Große bestimmt wird. Beispielhaft sei hierfür auf WO 99/04222 und DE 198 08 517 A1 verwiesen. Zum besseren Verständnis wird im Folgenden anhand Fig. 4 der Aufbau und die Funktionsweise eines SAGNAC-Interferometers in Closed-Loop-Anordnung zur Messung der physikalischen Größe Drehrate als Beispiel eines faseroptischen Systems kurz erläutert.

Das Licht einer hinsichtlich Intensität stabilisierten Lichtquelle 21, insbesondere einer Superlumineszenzdiode (SLD) gelangt über eine Faserstrecke auf einen ersten Strahlteiler 22, auch als Koppler bezeichnet, von dort über einen Polarisator 23 auf einen zweiten Strahlteiler, den Hauptstrahlteiler 24. Von den beiden der Lichtquelle 21 abgewandten Aus-/Eingängen gelangen die durch Strahlteilung entstandenen Teilstrahlen auf die beiden Ein-/Ausgänge einer Faserspule 25, wobei zwischen den Aus-/Eingängen des Hauptstrahlteilers 24 bzw. den Ein-/Ausgängen der Faserspule 25 ein erster Phasenmodulator 26 angeordnet ist. Die im Hauptstrahlteiler 24 nach Durchlaufen der Faserspule 25 interferierenden Teilstrahlen durchlaufen wiederum den Polarisator 23 und werden über den ersten Strahlteiler 22 zu einem möglichst halben Anteil auf einen Fotodetektor 27 geleitet. Das Ausgangssignal des Detektors 27 wird zunächst durch einen Verstärker 28 angehoben und beaufschlagt einen Demodulator 29 einerseits und einen Synchrondemodulator 30 andererseits. Der Demodulator 29 bildet zusammen mit einem Verstärkungsfilter 31 eine Skalenfaktorregelstrecke. Der Synchrondemodulator 30 steuert über ein Filter 32 einen Rampengenerator 33 an, der zur Erzeugung eines Rückstellsignals dient. Das durch einen Modulationsoszillator 34 erzeugte Signal zum Verschieben des Arbeitspunktes in den Punkt höchster Empfindlichkeit und das Rückstellsignal werden durch einen Addierer 35 zu einem einzigen Signal zusammengesetzt und bilden das Eingangssignal eines regelbaren Verstärkers 36, welcher dieses Signal mit einem als Verstärkungsfaktor dienenden Ausgangssignal des Verstärkungsfilters 31 verstärkt. Das dadurch erhaltene Ausgangssignal des regelbaren Verstärkers 36 dient wiederum zur Ansteuerung des ersten Phasenmodulators 26, der die optische Phase entsprechend moduliert und rückstellt. Somit kann eine durch Drehung der Spule 25 verursachte Phasenverschiebung, die die gegenläufigen Teilstrahlen aufgrund des Sagnac-Effektes erfahren, ermittelt, und darüber auf die Drehrate beziehungsweise die Größe der Drehung geschlossen werden.

Um ein zuverlässiges Detektorausgangssignal zu erhalten und damit eine zuverlässige Messung der physikalischen Größe zu ermöglichen, ist man bestrebt, das Rauschen des Detektors 27 bzw. das Rauschen in dem durch den Detektor 27 erzeugten Detektorausgangssignal möglichst gering zu halten. Das Rauschen hängt unter anderem auch von der Signalamplitude des auf den Detektor 27 auftreffenden Lichtstrahls ab. Eine Erhöhung der Detektorlichtleistung, d. h. eine Erhöhung der Intensität des auf den Detektor 27 auftreffenden Lichtstrahls verringert das Rauschen des Detektorausgangssignals, da hierdurch der Signal-Rauschabstand vergrößert wird. Der Zusammenhang zwischen Detektorlichtleistung und Rauschen im Detektorausgangssignal stellt eine für den Detektor 27 bzw. für den Arbeitspunkt des Detektors 27 charakteristische Größe dar, die durch Test bzw. Kalibration ermittelt werden kann, und die ein Maß für die sog. Detektivität des Detektors 27 ist.

Wie bereits erwähnt, ist die Intensität des auf den Detektor 27 auftreffenden Lichtstrahls maßgeblich für das Rauschen im Detektorausgangssignal. Die Lichtstrahlintensität am Detektor ist hierbei größtenteils abhängig von "Streckenverlusten", die das Licht beim Durchsetzen des Interferometers erleidet, beispielsweise im Strahlteiler 22, im Polarisator 23 und in der Faserspule 25. Die Lichstrahlintensität ist jedoch auch von der optischen Leistung bzw. Schwankungen in der optischen Leistung der Lichtquelle 21 abhängig. womit das alterungsbedingte, inherente Nachlassen der optischen Lichtquellenleistung einen wesentlichen Einfluss auf das Rauschen und damit auf die Langzeitzuverlässigkeit des Interferometers 20 hat. Da das Nachlassen der Lichtquellenleistung unvermeidlich ist, ist es bekannt, die Lichtquellenleistung "überproportional" hoch einzustellen, um dadurch selbst bei abnehmender Lichtquellenleistung eine ausreichende Intensität des Lichtstrahls zu gewährleisten. Dies hat jedoch den Nachteil, dass die Belastung der Lichtquelle 21 unnötig vergrößert wird, was zu einer Verkürzung der Lebensdauer der Lichtquelle 21 führt.

Die der Erfindung zugrundeliegende Aufgabe ist es, ein Verfahren und eine Einrichtung anzugeben, mit dem die Langzeit-Betriebszuverlässigkeit eines faseroptischen Interferometers erhöht werden kann.

Diese Aufgabe wird bei einem erfindungsgemäßen Verfahren zur Erhöhung der Langzeit-Betriebszuverlässigkeit eines faseroptischen Interferometers durch die Merkmale des Patentanspruchs 1 gelöst. Desweiteren stellt die Erfindung ein dazu geeignetes faseroptisches Interferometer gemäß Patentanspruch 5 bereit. Vorteilhafte Ausführungsformen bzw. Weiterbildungen des Erfindungsgedankens finden sich in jeweiligen Unteransprüchen.

Ein wesentlicher Aspekt der Erfindung ist, dass durch Nachregelung der Detektorlichtleistung mittels Variation der Lichtquellenleistung über einen Regelkreis das Rauschen des Detektorausgangssignals auf einen gewünschten Wert eingestellt wird. Die Lichtquellenleistung wird also in Abhängigkeit der Detektorlichtleistung eingestellt. Anders ausgedrückt: Das Interferometer ist rauschgeregelt. Dies ermöglicht es, eine gewünschte Detektorlichtleistung und damit einen gewünschten Rauschpegel im Detektorausgangssignal bei gleichzeitig optimierter Lichtquellenleistung einzustellen, da die Lichtquellenleistung nur dann gezielt erhöht bzw. erniedrigt wird, wenn sich die Detektorlichtleistung "verschlechtert" bzw. "verbessert" hat. Die Belastung der Lichtquelle kann damit reduziert werden, was zu einer verlängerten Lebenszeit der Lichtquelle führt. Die Variation der Lichtquellenleistung erfolgt hierbei über Variation des Lichtquellenstroms.

Vorzugsweise wird die Lichtquellenleistung so variiert, dass die Detektorlichtleistung und damit das Rauschen des Detektorausgangssignals konstant ist. Damit kann die weitere Auswertung des Detektorausgangssignals einfach gehalten werden. Das zur Rauschregelung als Kalibrationswert benötigte Verhältnis zwischen Detektorlichtleistung und Rauschen im Detektorausgangssignal kann dabei durch Eichprozesse bzw. durch Tests bestimmt werden.

Die Detektorlichtleistung und das damit korrelierte Detektor-Rauschen werden aus der Intensität des Detektorausgangssignals ermittelt, oder durch direktes Berechnen des Rauschens im Detektorausgangssignal mittels Softoder ASIC-Hardware. Hat sich beispielsweise die Intensität des Detektorausgangssignals verringert oder das Rauschen im Detektorausgangssignal erhöht, so wird die Lichtquellenleistung über einen Regelkreis unter Zuhilfenahme von Sollwerten bzw. Kalibrationskonstanten so lange erhöht, bis die Detektorlichtleistung und damit das Rauschen wieder den gewünschten Wert erreichen. Damit wird die Lichtquellenleistung in Abhängigkeit des Detektorausgangssignals nachregelt.

Der Regelkreis weist in einer besonders bevorzugten Ausführungsform einen mit dem Detektor verbundenen Hilfssignalgenerator zur Analyse des Detektorausgangssingnals und zur Erzeugung eines Hilfssignals auf, wobei das Hilfssignal entweder ein Maß für das Rauschen im Detektorausgangssingnal oder ein Maß für die Stärke des Detektorausgangssignals ist. Desweiteren weist der Regelkreis einen mit dem Hilfssignalgenerator und der Lichtquelle verbundenen Rauschregler auf, durch den in Abhängigkeit von dem Hilfssignal und gespeicherten Kalibrationswerten ein Lichtquellenstrom der Lichtquelle und damit die Detektorlichtleistung änderbar ist.

Der Hilfssignalgenerator kann hierbei als Teil eines Automatic-Gain-Control (AGC)-Reglers zum Ausgleichen von Schwankungen des Detektorausgangssignals aufgrund von Lichtleistungsschwankungen am Detektor ausgestaltet sein, wobei in dieser Ausführungsform der Hilfssignalgenerator ein Hilfssignal proportional zur Stärke des Detektorausgangssignals erzeugt, das zur Steuerung eines in dem AGC-Regler enthaltenen Signalpegelreglers zum Ausgleichen der Schwankungen des Detektorausgangssignals und zusätzlich zur Steuerung des Rauschreglers dient. Da in den meisten Fällen, insbesondere im Fall von Closed-Loop-Interferometern ein AGC-Regler und damit ein Hilfssignalgenerator bereits vorhanden ist, muss dem Interferometer lediglich der Rauschregler, durch den in Abhängigkeit von dem Hilfssignal und gespeicherten Kalibrationswerten die Lichtquellenleistung geändert wird, hinzugefügt werden. Es sind somit keine wesentlichen Änderungen am Interferometer vorzunehmen, vorhandene Strukturen werden genutzt.

Vorzugsweise sind der AGC-Regler und der Rauschregler durch unterschiedliche Zeitkonstanten voneinander entkoppelt. Der AGC-Regler als unterlagerter Hilfsregler kompensiert dabei kurzfristige Lichtleistungsschwankungen am Detektor, langfristige Lichtleistungsschwankungen werden durch den Rauschregler ausgeglichen. Durch Wahl entsprechender Zeitkonstanten lässt sich die Wirkungsweise auch umdrehen.

In einer weiteren Ausführungsform ist der Hilfssignalgenerator so ausgestaltet, dass damit das Rauschen im Detektorausgangssignal über geeignete Algorithmen direkt ermittelbar und ein entsprechendes Rauschsignal als Hilfssignal erzeugbar ist. Das Rauschsignal dient dann als Stellgröße für den Rauschregler.

Die Verwendung eines Regelkreises zum Einstellen des Rauschens hat weiterhin den Vorteil, dass darüber der Alterszustand des Interferometers, insbesondere der Alterszustand der Lichtquelle aus dem aktuellen Wert der Lichtquellenleistung ablesbar ist: Ermittelt man die Differenz zwischen einer für einen zulässigen Rauschpegel im Detektorausgangssignal benötigten Ausgangs-Lichtquellenleistung (bzw. den dafür benötigten Lichtquellenstrom) bei Inbetriebnahme des Interferometers und einer für denselben Rauschpegel benötigten aktuellen Lichtquellenleistung, so kann daraus auf einen Alterungszustand des Interferometers geschlossen werden.

Ein weiterer Vorteil der Erfindung ist, dass durch den Regelkreis optische Transmissionsschwankungen kompensiert werden. Ferner können Lichtquellen mit stärker polarisiertem Licht verwendet werden. Wesentliche Ursachen für diese Transmissionsschwankungen sind Temperaturabhängigkeiten des Interferometers sowie polarisationsbedingte Lichtleistungsverluste (Power-Fading). Um die optischen Transmissionsschwankungen auszugleichen, wird üblicherweise die Lichtquellenleistung um den Faktor k=( 1+Fehler) kompensiert, was jedoch, wie bereits erwähnt, negative Auswirkungen auf die Lebensdauer der Lichtquelle hat. Desweiteren führt dies zu engeren Toleranzkriterien (höhere Herstellungskosten) für optische Bauteile des Interferometers. Durch die Verwendung des erfindungsgemäßen Regelkreises wird der Einsatz von kostengünstigen Designs bei gleichen Leistungsmerkmalen ermöglicht, da Transmissionsschwankungen des Lichts ausgeregelt werden.

Durch das Nachregeln des Rauschens entfällt ferner die Notwendigkeit, dass sich die Lichtquellenleistung nach einem Burn-In des Sensors außerhalb des statistischen Frühausfall-Bereichs (Early-Failure-Bereich) befindet.

Diese und weitere Merkmale und Vorteile der Erfindung werden in der folgenden Beschreibung unter Zuhilfenahme der Zeichnungen in beispielsweiser Ausführungsform näher erläutert. Es zeigen:
**Fig. 1:** den schematischen Aufbau eines Ausschnitts eines erfindungsgemäßen faseroptischen Interferometers mit Rauschregelung in einer ersten Ausführungsform;
**Fig. 2:** den schematischen Aufbau eines Ausschnitts eines erfindungsgemäßen faseroptischen Interferometers mit Rauschregelung in einer zweiten Ausführungsform;
**Fig. 3:** den schematischen Aufbau eines Ausschnitts eines erfindungsgemäßen faseroptischen Interferometers mit Rauschregelung in einer dritten Ausführungsform;
**Fig. 4:** den schematischen bereits erläuterten Aufbau eines faseroptischen Interferometers mit Closed-Loop-Aufbau.

In den Figuren sind einander entsprechende Bauteile mit denselben Bezugszeichen gekennzeichnet.

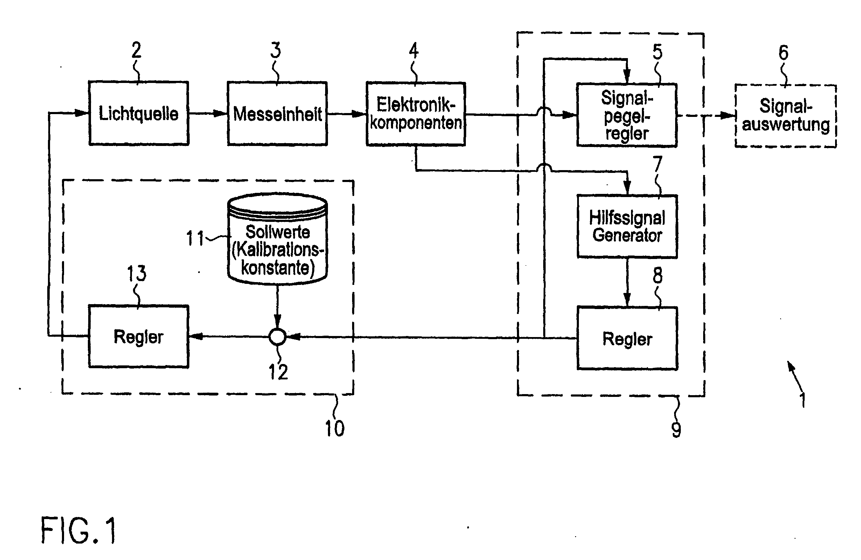

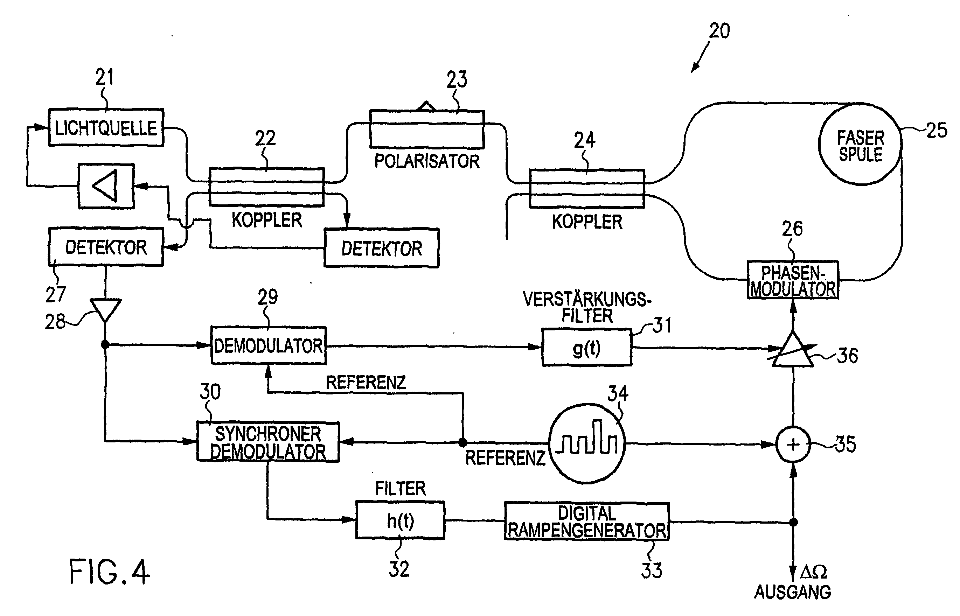

Fig. 1 zeigt einen Ausschnitt 1 der elektronischen Baugruppen eines faseroptischen Interferometers, bei dem von einer Lichtquelle 2 ausgehendes Licht durch eine Messeinheit 3 des Interferometers, d. h. im Wesentlichen die Faserstrecken und Komponenten 22 bis 26 in Fig. 4 geschickt, dabei der Lichtstrahl durch die zu messende physikalische Größe in seiner Intensität geändert und ein daraus resultierender Messstrahl analogen oder digitalen Elektronikkomponenten 4 zugeführt wird, die den Detektor 27, 28 zur Ermittlung der Messstrahlintensität enthalten. Ein durch den Detektor erzeugtes Detektoausgangssignal wird einerseits einem Hilfssignalgenerator 7, und andererseits einem Signalpegelregler 5 zugeführt. Der Hilfssignalgenerator 7 analysiert das ihm zugeführte Detektorausgangssignal und erzeugt ein der Intensität des Detektorausgangssignals proportionales Hilfssignal.

Das Hilfssignal dient als Stellgröße für einen ersten Regler 8, dessen Ausganggsignal den Signalpegelregler 5 in Abhängigkeit des Hilfssignals steuert. Der Signalpegelregler 5 regelt das ihm zugeführte Detektorausgangssignal so, dass ein konstanter Detektorausgangssignalpegel erreicht wird. Das verstärkte Detektorausgangssignal wird einer nicht gezeigten Signalauswertung 6 zugeführt.

Der Signalpegelregler 5, der Hilfssignalgenerator 7 und der erste Regler 8 bilden zusammen eine Automatic-Gain-Control-Regeleinheit 9 (im Folgenden AGC-Regler genannt), die bei Closed-Loop-Interferometern üblicherweise verwendet wird. Erfindungsgemäß wird das Ausgangssignal des ersten Reglers 8 zusätzlich einem Rauschregler 10 zugeführt, dessen Ausgangssignal wiederum die Lichtquellenleistung 2 bzw. den Lichtquellenstrom und damit die Detektorlichtleistung regelt. Das Ausgangssignal des ersten Reglers 8 wird hierzu über eine Addierstufe 12 mit einem in einem Speicher 11 gespeicherten Kalibrationswert kombiniert und ein resultierendes Additionssignal einem zweiten Regler 13 zugeführt. Das Ausgangssignal des zweiten Reglers 13 steuert dann die Lichtquelle 2. Der Rauschregler 10 wird also gebildet durch den Speicher 11, die Addierstufe 12 und den zweiten Regler 13.

Da der AGC-Regler 9 in den meisten Fällen bereits vorhanden ist, kann eine Rauschregelung gemäß der Erfindung mit minimalem zusätzlichen Aufwand, insbesondere ohne zusätzliche optische Komponenten realisiert werden. Die Verwendung eines AGC-Reglers garantiert eine sehr schnelle Verfügbarkeit von Interferometer-Sensordaten durch sein optimiertes Einschwingverhalten.

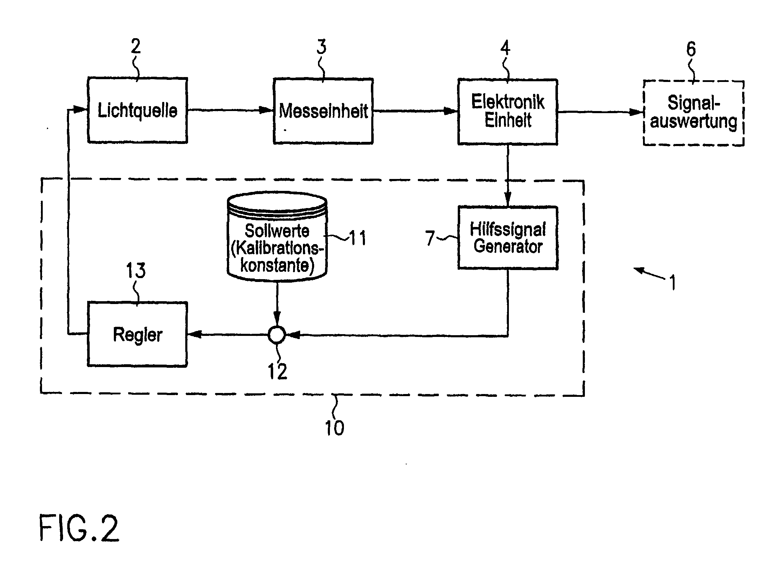

Die in Fig. 2 gezeigte Ausführungsform entspricht in Aufbau und Funktionsweise der Ausführungsform aus Fig. 1, mit dem Unterschied, dass der AGC-Regler 9 weggelassen ist, und stattdessen der Hilfssignalgenerator 7 in den Rauschregler 10 direkt integriert ist. Das durch den Hilfssignalgenerator 7 erzeugte Hilfssignal wird direkt an die Addierstufe 12 geleitet. Die in Fig. 1 gezeigte zweistufige Regelung wird also zu einer einstufigen Regelung vereinfacht.

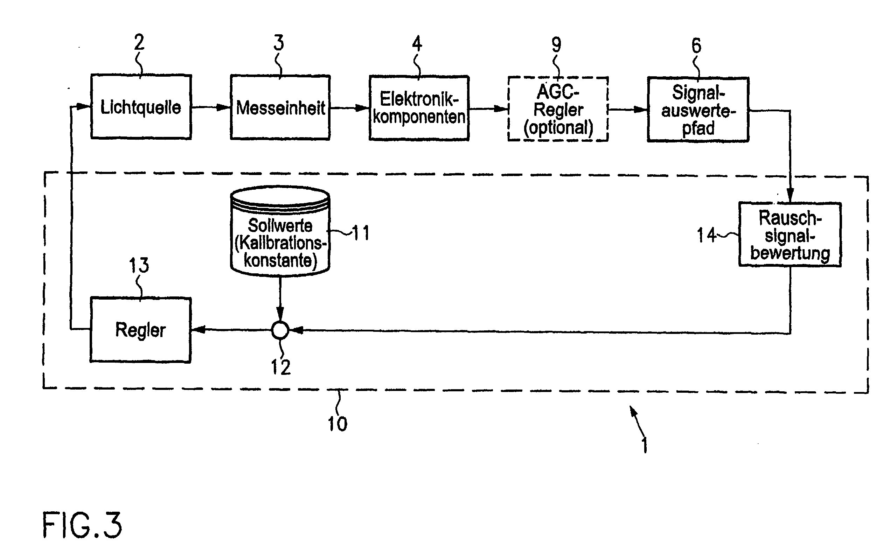

Bei den in Fig. 1 und Fig. 2 gezeigten Ausführungsformen bleibt die eigentliche Auswertung des Detektorausgangssignals unbeeinflusst. Im Gegensatz dazu wird in der in Fig. 3 gezeigten dritten Ausführungsform aus dem Detektorausgangssignal bzw. aus dem bereits verarbeiteten Detektorausgangssignal das Rauschen im Signal direkt ermittelt. Eine Baugruppe 14 zur Messung und Bewertung des im Detektorausgangssignal enthaltenen Rauschanteils (im Folgenden als Rauschsignalbewertung bezeichnet) erzeugt ein dem Rauschen proportionales Ausgangssignal, das die Addierstufe 12 bzw den zweiten Regler 13 beaufschlagt. Die Rauschsignalbewertung 14 entspricht somit ihrem Zweck nach dem Hilfssignalgenerator 7. Die Verwendung eines AGC-Reglers 9 ist optional, d. h. die Rauschregelung kann wie in Fig. 1 zweistufig oder wie in Fig. 2 einstufig erfolgen. Bei einer entsprechend langsamen Regelung ist es möglich, zeitaufwändige Algorithmen zum Trennen des Rauschens vom eigentlichen Messignal zu verwenden.

Die im Speicher 11 gespeicherten Sollwerte bzw. Kalibrationswerte sind exemplarspezifisch und können durch Test ermittelt werden. Damit lässt sich jedes Interferometer der hier in Rede stehenden Art individuell auf ein gewünschtes Rauschen konfigurieren.

Einflüsse auf die Wellenlänge des emittierten Lichts durch Variieren des Lichtquellenstroms können durch Korrekturalgorithmen mit den Parametern Lichtquellenstrom und Temperatur kompensiert werden. Die Betriebs- und Zerstörungssicherheit bei Fehlern im optischen Bereich kann durch geeignete Begrenzer sowohl im zweiten Regler 13 sowie in der Stromregelung für die Lichtquelle 2 sichergestellt werden.

## Patentansprüche

1. Verfahren zur Erhöhung der Langzeit-Betriebszuverlässigkeit eines faseroptischen Interferometers (1), wobei das Rauschen im Ausgangssignal des Detektors des Interferometers (1) auf einen gewünschten Wert eingestellt wird, indem durch Variation des Lichtquellenstroms der Lichtquelle des Interferometers und einer daraus resultierenden Änderung der Lichtquellenleistung die Detektorlichtleistung so nachgeregelt wird, dass letztere und damit das Rauschen im Detektorausgangssignal konstant bleiben, wobei bei Inbetriebnahme des Interferometers der Lichtquellenstrom gerade so hoch eingestellt wird, wie nötig ist, um den gewünschten Rauschwert einzuhalten.

2. Verfahren nach Anspruch 1, wobei durch Vergleich zwischen eines zur Erzielung eines zulässigen Rauschpegels im Detektorausgangssignal benötigten Ausgangs-Lichtquellenstroms und eines zur Erzielung desselben Rauschpegels benötigten aktuellen Lichtquellenstroms auf einen Alterungszustand des Interferometers (1), insbesondere der Lichtquelle (2) geschlossen wird.

3. Verfahren nach Anspruch 1, wobei die Stärke des Detektorausgangssignals als Maß für die Detektorlichtleistung ermittelt wird, und darauf basierend die Variation des Lichtquellenstroms erfolgt.

4. Verfahren nach Anspruch 1 oder 2, wobei das Rauschen im Detektorausgangssignal ermittelt wird, und darauf basierend die Variation des Lichtquellenstroms erfolgt.

5. Faseroptisches Interferometer (1) mit erhöhter Langzeit-Betriebszuverlässigkeit, mit einem Regelkreis (9, 10), durch den die Leistung der Lichtquelle (2) des Interferometers (1) mittels Variation des Lichtquellenstroms in Abhängigkeit von der Lichtleistung des Detektors des Interferometers (1) nachregelbar ist, wobei der Regelkreis aufweist:
- einen mit dem Detektor verbundenen Hilfssignalgenerator (7) zur Analyse des Detektorausgangssignals und zur Erzeugung eines Hilfssignals, das ein Maß für das Rauschen im Detektorausgangssignal oder ein Maß für die Stärke des Detektorausgangssignals ist, und
- einen mit dem Hilfssignalgenerator (7) und der Lichtquelle (2) verbundenen Rauschregler (10), durch den in Abhängigkeit von dem Hilfssignal und gespeicherten Kalibrationswerten der Lichtquellenstrom der Lichtquelle (2) und damit die Detektorlichtleistung änderbar ist, wobei bei Inbetriebnahme des Interferometers der Lichtquellenstrom gerade so hoch eingestellt ist, wie nötig ist, um einen gewünschten Rauschwert im Ausgangssignal des Detektors einzuhalten.

6. Faseroptisches Interferometer (1) nach Anspruch 5, wobei der Regelkreis einen AGC-Regler (9) zum Ausgleichen von Schwankungen des Detektorausgangssignals aufgrund von Lichtleistungsschwankungen am Detektor ausweist, wobei der Hilfssignalgenerator (7) als Teil des AGC-Reglers (9) ausgestaltet, und das durch den Hilfssignalgenerator (7) erzeugte Hilfssignal proportional der Stärke des Detektorausgangssignals ist, wobei das Hilfssignal zur Steuerung eines als Teil des AGC-Reglers (9) ausgebildeten Signalpegelreglers (5) zum Regeln des Detektorausgangssignals und des Rauschreglers (10) dient.

7. Faseroptisches Interferometer (1) nach Anspruch 6, wobei der AGC-Regler (9) und der Rauschregler (10) durch unterschiedliche Zeitkonstanten voneinander entkoppelt sind.

## Claims

1. A method for increasing the long-term operational reliability of a fiber optic interferometer (1), wherein the noise in the output signal of the detector of the interferometer (1) is set to a desired value by correcting the detector light power by varying the light source current of the light source of the interferometer and a change, resulting therefrom, in the light source power, doing so in such a way that the detector light power and thus the noise in the detector output signal remain constant, the light source current being set upon starting up the interferometer to be just so high as required to maintain the desired noise value.

2. The method as claimed in claim 1, wherein a state of aging of the interferometer (1), in particular of the light source (2), is inferred by comparing an output light source current required to achieve a permissible noise level in the detector output signal with an actual light source current required to achieve the same noise level.

3. The method as claimed in claim 1, wherein the strength of the detector output signal is determined as a measure of the detector light power, and the variation of the light source current is performed on the basis thereof.

4. The method as claimed in claim 1 to 2, wherein the noise in the detector output signal is determined, and the variation of the light source current is performed on the basis thereof.

5. A fiber optic interferometer (1), with increased long-term operational reliability, having a control loop (9, 10) by means of which the power of the light source (2) of the interferometer (1) can be corrected by varying the light source current as a function of the light power of the detector of the interferometer (1), wherein the control loop has:
- an auxiliary signal generator (7), connected to the detector, for analyzing the detector output signal and for generating an auxiliary signal that is a measure of the noise in the detector output signal or a measure of the strength of the detector output signal, and
- a noise controller (10) which is connected to the auxiliary signal generator (7) and the light source (2) and by means of which the light source current of the light source (2), and thus the detector light power, can be changed as a function of the auxiliary signal and stored calibration values, the light source current being set upon starting up the interferometer to be just so high as required to maintain a desired noise value in the output signal of the detector.

6. The fiber optic interferometer (1) as claimed in claim 5, wherein the control loop has an AGC controller (9) for compensating fluctuations in the detector output signal caused by light power fluctuations at the detector, the auxiliary signal generator (7) being configured as part of the AGC controller (9), and the auxiliary signal generated by the auxiliary signal generator (7) being proportional to the strength of the detector output signal, the auxiliary signal serving to control a signal level controller (5), designed as part of the AGC controller (9), for controlling the detector output signal and the noise controller (10).

7. The fiber optic interferometer (1) as claimed in claim 6, wherein the AGC controller (9) and the noise controller (10) are decoupled from one another by different time constants.

## Revendications

1. Procédé pour accroître la fiabilité de fonctionnement à long terme d'un interféromètre (1) à fibres optiques, dans lequel le bruit dans le signal de sortie du détecteur de l'interféromètre (1) est réglé à une valeur souhaitée, en ce que par variation du courant de source lumineuse de la source lumineuse de l'interféromètre et d'une modification en résultant de la puissance de la source lumineuse, on rajuste la puissance lumineuse du détecteur de manière que cette dernière et donc le bruit dans le signal de sortie du détecteur reste constant, le courant de la source lumineuse étant réglé à la mise en service de l'interféromètre à une valeur aussi élevée que nécessaire pour respecter la valeur de bruit voulue.

2. Procédé selon la revendication 1, dans lequel par comparaison entre un courant de sortie de la source lumineuse, nécessaire pour obtenir un niveau de bruit admissible dans le signal de sortie du détecteur et entre un courant actuel de la source lumineuse nécessaire pour obtenir ce même niveau de bruit, on conclut à un état de vieillissement de l'interféromètre (1), en particulier de la source lumineuse (2).

3. Procédé selon la revendication 1, dans lequel l'intensité du signal de sortie du détecteur est déterminée en tant que critère de la puissance lumineuse du détecteur, et la variation du courant de la source lumineuse s'effectue sur cette base.

4. Procédé selon la revendication 1 ou 2, dans lequel on détermine le bruit dans le signal de sortie du détecteur et la variation du courant de la source lumineuse s'effectue sur cette base.

5. Interféromètre (1) à fibres optiques avec fiabilité de fonctionnement à long terme accrue, comportant un circuit de régulation (9, 10) par lequel on peut rajuster la puissance de la source lumineuse (2) de l'interféromètre (1), par variation du courant de la source lumineuse en fonction de la puissance lumineuse du détecteur de l'interféromètre (1), dans lequel le circuit de régulation comporte:
- un générateur de signaux auxiliaires (7) relié au détecteur pour l'analyse du signal de sortie du détecteur et pour produire un signal auxiliaire qui est un critère du bruit dans le signal de sortie du détecteur ou un critère de l'intensité du signal de sortie du détecteur, et
- un régulateur de bruit (10), relié au générateur de signaux auxiliaires (7) et à la source lumineuse (2), par lequel on peut modifier, en fonction du signal auxiliaire et de valeurs d'étalonnage mémorisées, le courant de la source lumineuse (2) et donc la puissance lumineuse du détecteur, le courant de la source lumineuse étant réglé à la mise en service de l'interféromètre à une valeur aussi élevée que nécessaire pour respecter une valeur de bruit souhaitée dans le signal de sortie du détecteur.

6. Interféromètre (1) à fibres optiques selon la revendication 5, dans lequel le circuit de régulation comporte un régulateur AGC9 pour compenser les fluctuations du signal de sortie du détecteur sur la base de fluctuations de la puissance lumineuse du détecteur, le générateur de signaux auxiliaires (7) étant conçu comme partie du régulateur AGC9, et le signal auxiliaire, produit par le générateur de signaux auxiliaires (7), est proportionnel à l'intensité du signal de sortie du détecteur, le signal auxiliaire servant à commander un régulateur de niveau de signal (5) réalisé comme partie du régulateur AGC9, pour réguler le signal de sortie du détecteur et le régulateur de bruit (10).

7. Interféromètre (1) à fibres optiques selon la revendication 6, dans lequel le régulateur AGC9 et le régulateur de bruit (10) sont désaccouplés l'un de l'autre par des constantes de temps différentes.
